# EUROPEAN PATENT SPECIFICATION

(11) **EP 3 989 744 B1**
(45) Date of publication and mention of the grant of the patent: **22.01.2025**
(21) Application number: 20733974.8
(22) Date of filing: 18.06.2020
(51) Int. Cl.: A23P 20/10, A23L 7/10, A23L 13/50, A23J 3/18, A23J 3/30

(54) **HYDROLYZED GLUTEN-BASED DUSTER COMPOSITION FOR DEEP FRIED FOOD**
HYDROLYSIERTE GLUTENBASIERTE ÜBERZUGSZUSAMMENSETZUNG FÜR FRITTIERTE LEBENSMITTEL
COMPOSITION POUDREUSE À BASE DE GLUTEN HYDROLYSÉ POUR ENROBAGE D'ALIMENTS FRITS

(30) Priority: 27.06.2019 EP 19305864
(43) Date of publication of application: 04.05.2022
(73) Proprietor: ROQUETTE FRERES, 62136 Lestrem (FR)
(72) Inventor: ITO, Goichi, Koganei-city Tokyo, Tokyo 184-0014 (JP); HORI, Sayaka, Tokyo, Tokyo 113--0024 (JP)
(74) Representative: Plasseraud IP
(86) International application number: PCT/EP2020/067029
(87) International publication number: WO 2020/260139

(56) References cited:
- WO-A1-2005/079586
- WO-A1-2005/104870
- JP-A- 2008 072 926
- US-A- 3 314 800
- US-A- 5 266 340
- US-A1- 2019 133 156
- US-B1- 6 174 559
- F KALIN: "Wheat Gluten Applications in Food Products", JAOCS, vol. 56, no. 3, 1 January 1977 (1977-01-01), pages 477 - 479, XP055650142, DOI: https://doi.org/10.1007/BF02671549

## Description

### Technical Field

The invention relates to the deep-fried food, in particular in the use of hydrolyzed gluten in duster composition for deep fried food.

### Background Art

Deep frying is a cooking method in which food is immerged in hot edible oil. This is normally performed with a deep fryer or chip pan, and industrially, a pressure fryer or vacuum fryer may be used. Deep frying is classified as a dry cooking method because no water is used. Due to the high temperature involved and the high heat conduction of oil, the food is then prepared quickly.

The method of preparation of deep-fried food often includes a coating process of food products. Coating process was first commercially introduced in the late 1930's, for sea foods. Today, many food products are coated, and commercial coatings are formulated from various flours, seasonings, batters and breading that enhance food product appearance and texture while preserving flavor and moisture.

In the method of preparation of deep fried food product, the coating process allows to improve the visual appearance and uniqueness of the food product, enhance the taste by adding flavor, change the texture, mouth feel or 'bite', modify the nutritional value (addition of vitamins or calories), increase yield to increase product value, reduce the product cost, use of trim/waste products, protect the product during freezing or enable more reconstitution methods.

Typically, the coating process of food product involves three types of coatings, arranged in three successive layers:
- Pre-dust or duster which is a dry coating used to form a mediated layer between the food product and the next batter layer. Pre-dust or duster by sticking to the food prepares the surface of the food for next layer application,
- Batter which is a wet coating, is applied over the pre-dust layer to create the base for adhering the third layer of breading,
- Breading (or breader) which is a dry (particulate) coating, generally cereal based product which has been baked and later grained into fine, medium or large crumbs. Breading typically contains components ranging from flour to bread crumb and coarse cornflakes.

A pre-dust or duster comprises a mixture of finely ground grain-based breading or dry batter. It is usually applied as the first layer to the food product to prepare the surface of the food product for the next layers applications. Pre-dust may be off-the-shelf commodity items or tailor-made product for a particular product or process. They are usually flour-based but may contain additional agents to help the coatings to bind to the substrate. Pre-dust and dusters are always in dry powder form. Flour-based dusters have been used since many years but they have many drawbacks. One of them is the relative inability to keep juicy inside of deep dried food juicy under the storage of hot lamp or after re-heating in oven or microwave. Juice from inside permeates outside, leaving the food drier.

After cooking, the crispy texture of the food product with wheat flour-based duster is not maintained for a long. At room temperature, its texture becomes soft due to the migration of moisture on the surface from batter layer. However, even if deep fried product is stored in a hot showcase after the cooking, the food stuff becomes harder and the external texture chewy. Consequently, wheat flour-based duster does not allow the maintenance of texture after cooking.

Moreover, wheat flour-based duster also has weak point on the adhesion function. In order to make deep fried product with good aspect, good adhesion between topping and batter layer is important. Wheat flour-based duster does not allow a good adhesion between these two layers. Moreover, low adhesion affects not only the aspect, but also the texture of the product. Thus, this parameter is considered as an important parameter of deep-fried food.

Deep fried foods can be consumed right after deep-frying, but they also can be stored under an infrared lamp storage, in order to keep them hot more than 4 hours. Such storage is very common in Asian countries, in shops called convenient stores and supermarkets. Unfortunately, soon after storage, deep fried foods lose its juiciness and crispy texture.

After deep frying, deep fried food can also be cold stored, e.g. in refrigerator, and reheat with a microwave or conventional oven. In these cases, deep fried foods lose a significant quantity of juice that makes deep fried food drier than just after its cooking.

Wheat gluten is used for film forming abilities and has interest in food industry. In "Wheat Gluten Applications in Food Products" (Kalin & al., J. Am. Oil Chemists Soc., March 1979, V5-, p477-479), wheat gluten is described as a "unique and film-forming character of hydrated vital wheat gluten". Vital wheat gluten is mainly used in baking but also in breading and batter. Kalin et al. does not describe any dusters. As disclosed in US 6,174,559, wheat gluten is known as an edible coating in its colloidal form. In this patent is teached the use of a colloidal solution of hydrolyzed gluten as an improved edible coating. In this document, the hydrolyzed gluten is the only dry compound used (100% of the colloidal solution in dry matter). Further, deep-frying processes and the use of hydrolysed wheat gluten in a duster are not disclosed.

In the field of deep fried foods, the applicant has now found an inventive solution, including the use of hydrolyzed gluten in the duster, in order to avoid the drawbacks mentioned here-above.

The invention will be described in the following general description chapter.

### Summary of the invention

The scope of the claimed invention is defined in the appended claims. The inventors have shown that the use of hydrolyzed wheat gluten in the duster allows keeping a juicy meat taste, just after deep frying or after 4 hours, even under storage in hot showcase (an infrared lamp). A clear difference from conventional products is shown in the examples below: deep fried foods obtained with a duster including hydrolyzed wheat gluten keep moisture inside, maintain crispy texture and a better adhesion between batter and breading.

As shown in the examples below, duster composition comprising only hydrolyzed wheat gluten is not strong enough to retain juice inside deep fried food. In the duster composition, hydrolyzed wheat gluten must be above 1% but below 65%.

A first embodiment is a duster composition for deep fried foods comprising between around 1% and 65% of hydrolyzed gluten, preferably between 14% and 65% by weight of total dry weight of the duster. In a particular embodiment the hydrolyzed gluten wheat has a hydrolysis degree comprised between 0.5 to 5 %. The duster composition may further comprise native wheat gluten and/or wheat flour. In a more particular embodiment, the duster composition as previously defined consists of 1 to 65% of hydrolyzed gluten by weight of total dry weight and 35 to 99 % native gluten by weight of total dry weight.

In a second embodiment, the present invention relates to a method for producing a duster composition as previously defined comprising the steps of:
1) providing native wheat gluten;
2) hydrolyzing wheat gluten for obtaining a degree of hydrolysis (DH) between 0.5% and 5%;
3) mixing hydrolyzed wheat gluten with other compounds in order to have between 1% and 65% of hydrolyzed wheat gluten by weight of total dry weight
4) optionally drying the mix obtained in step 3.

A third embodiment is a deep-fried food product comprising foodstuff coated with a duster composition as defined previously.

A last embodiment is a method of preparing a deep-fried food comprising the steps of: coating a food product with a pre-dust composition as defined previously, coating the duster-coated food product with a batter composition, and coating the batter-coated food product with a breading composition.

### Brief description of the Figures

**Figure 1** represents the photos of deep-fried food obtained with the different compositions of dusters. Coating condition and coating texture description of the deep-fried foods are indicated under the photos.
**Figure 2** represents the photos of the deep-fried food obtained with duster comprising different amounts of hydrolyzed gluten wheat.
**Figure 3** represents the photos of the deep-fried food obtained with gluten and hydrolyzed gluten mix duster and wheat flour duster.
**Figure 4** represents the photos of the deep-fried food obtained with gluten and hydrolyzed gluten mix duster and wheat flour duster after storage under a hot showcase at 60°C during 4,5h.
**Figure 5** represents the photos of the deep-fried food obtained with gluten and hydrolyzed gluten mix duster and wheat flour duster rapidly frozen, at -40°C for 1 h and reheat with a conventional oven at 220°C during 10 min.

### Detailed description of Embodiments

A first embodiment is a duster composition for deep fried foods comprising between 1% and 65%, preferably between 14% and 65% of hydrolyzed wheat gluten by weight of the total dry weight of the duster. As demonstrated in the examples, inventors have demonstrated that the use of hydrolysed wheat gluten in the duster of the invention, even in very small quantities of around 1%, improves the texture and color of the deep fried foods.

In this application "duster" must be understood as a blend or pure powder, composed of finely ground material. It is usually applied as the first layer in a coating system as it prepares the surface of the substrate to allow the remainder of the coating system to be 'built' on top of it. Pre-dusts may be off-the-shelf commodity items or tailor-made for a particular product or process. They are usually flour based but may contain additional agents to help coatings bind better to the substrate. Typical dusters used in the food industry are wheat flour, rice flour, tapioca flour, maize starch or potato starch.

In this application "hydrolyzed gluten" must be understood as vital wheat gluten (see below its definition), that have been hydrolyzed, which must be understood as a reduction of molecular weight of proteins constituting wheat gluten. In order to hydrolyze wheat gluten, man skilled in the art can choose between all process known as of today, including chemical process e.g. acid hydrolysis or alkaline hydrolysis or biochemical process e.g. proteases, peptidases.

In a preferred embodiment, hydrolyzed wheat gluten is characterized by a degree of hydrolysis (DH) from 0,5% to 5%, preferably from 1% to 4%, more preferably from 2% to 3%. The degree of hydrolysis is defined as the proportion of cleaved peptide bonds in a protein hydrolysate. The degree of hydrolysis can be easily known using well-known protocols like o-phthaldialdehyde (OPA) or trinitrobenzenesulfonic acid (TNBS) colorimetric methods. In this present application, preferred method is OPA. In a preferred embodiment, the duster composition also includes wheat gluten, preferably only wheat gluten and hydrolyzed wheat gluten excluding others compounds.

In this application "wheat gluten" must be understood as native wheat gluten which is one of the most abundant proteins in wheat crops, constituted by gliadine and glutenines. Native gluten must be understood as gluten obtained by a process which do not denaturate wheat gluten and keep its viscoelastic properties. In other terms, native wheat gluten is also known as vital gluten.

In another preferred embodiment, the duster will also include wheat flour.

In this application "wheat flour" must be understood as wheat seeds that have been milled in order to reduce particle size. Wheat flour can be process internally or buy on commercial market.

A second embodiment is a process for producing the duster as described previously comprising the steps of: 1) providing wheat gluten; 2) hydrolysing wheat gluten in order to reach DH between 0,5% to 5%, preferably from 1% to 4%, more preferably from 2% to 3%; 3) mixing hydrolyzed wheat gluten with other compounds in order to have a content between 1% and 65%, preferably 14 to 65%; 4) Optional drying of the mix;

The first step consists in providing wheat gluten. Wheat gluten can be bought in commercial market. It can be native or vital. Wheat gluten can also be extracted from wheat seeds. In order to extract native gluten, man skilled in the art uses commonly known processes.

The second step consists in hydrolyzing wheat gluten. A first solution can be the use of acid or alkaline reagent in order to reduce size of gluten. A second solution, more preferred, can be the use of proteases and/or peptidases. Enzymes cut selectively amino acids bonds and reduce protein molecular weight. In a preferred embodiment, enzyme is a Neutrase, which is a protease produced from Bacillus amyloliquefaciens liquid. Hydrolysis protocol consists in 1) adding a selected quantity of protease to native gluten, 2) adjusting temperature and pH at enzyme optimum, 3) executing hydrolysis by homogenizing gluten /enzyme mix and checking hydrolysis degree, 4) stopping reaction when hydrolysis degree is reached by adjusting pH far from optimum pH;

The third step consists in mixing hydrolyzed wheat gluten with other compounds. Other compounds can be chosen preferably in the list of wheat gluten, wheat flour. In a more preferred embodiment, other compounds consist of gluten and/or wheat flour.

The mix can be done in a wet way with enough stirring and homogenizing power. It can also be done in a dry way with the help of well-known selected devices.

In the mix, hydrolyzed wheat gluten represents between 1 % to 65% of the total dry matter of the duster composition, preferably between 14% and 65%.

The fourth optional step consists in optional drying in order to remove residual water and optimize shelf life stability. This step is needed in particular if mix is done in a wet way. Dry matter of the mix needs to be rised above 80%, preferably above 85%, more preferably above 90%.

Another embodiment is the industrial use of such duster for deep fried food cooking. The present invention also relates to a deep-fried food product comprising foodstuff coated with a duster composition as previously defined and a method for preparing a deep-fried food comprising the steps of: coating a food product with a duster composition as defined previously, coating the duster-coated food product with a batter composition and coating the batter-coated food product with a breading composition.

Invention will be better understood with the help of the following detailed description of embodiments.

### Examples

In the examples below, commercial hydrolyzed wheat gluten from Roquette Frères is used. It contains 88.5% of proteins (N 6,25 method) with a DH of 2,5 (OPA method)

### Example 1: effect of use of hydrolyzed wheat gluten in duster on deep fried food quality

Different products listed in Table 1 used as dusters are compared.

**Table 1: Different duster types compositions**

| **Wheat flour** | **Corn Starch** | **Rice flour** |
|---|---|---|
| | | |

| **Amusko Ki** | **Wheat Flour + 8% Nutralys W** | **Viten + Nutralys W** |
|---|---|---|
| Oil coated tapioca starch | Mix of wheat flour with 8% of hydrolyzed wheat gluten (Roquette freres) | Mix of wheat gluten with 8% of hydrolyzed wheat gluten (both from Roquette freres) |

As a second layer, the batter composition of the Table 2 below is used for all samples.

**Table 2: Batter composition**

| | % |
|---|---|
| **CLEARAM LG0005 (starch from Roquette)** | 81.1 |
| **Tackidex B735 (dextrin from Roquette)** | 12 |
| Salt | 5 |
| Sodium bicarbonate | 0.9 |
| SAPP (dissodium dihydrogen pyrophosphate) | 0.9 |
| Xanthan gum | 0.1 |

Water is added to powder in a ration 1,5/1 and the mix is homogenized As a third layer, the breader composition of the Table 3 below is used for all samples

**Table 3: Breader composition**

| | **control** |
|---|---|
| **PREGEFLO MI20A** | 75.6 |
| Salt | 8 |
| Sugar | 9 |
| Black pepper | 2 |
| MSG (monosodiium gultamate) | 2 |
| Garlic powder | 1.4 |
| Ginger powder | 1 |
| Paprika powder | 1 |

The process to obtain deep-fried chicken meat is the following:
Dust each material listed in Table 1 on a surface of piece of chicken meat.
Dip them into a batter and then dust breader on a surface
Deep fry for 5 min at 180°C.
Stock under hot showcase (60°C) from 0 to 9 hours.

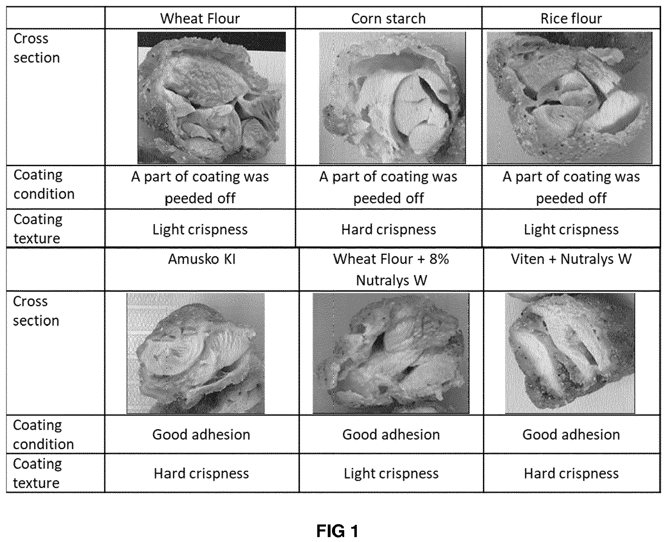

Photos are taken and coating condition/texture are evaluated (Figure 1).

The use of hydrolyzed gluten at 8% in wheat flour improves duster properties. The adhesion and the coating texture are similar to oil coated starch (Amusko KI) duster condition. The use of a mix of gluten and hydrolyzed gluten can also give good results, allowing removal of all starch from duster (Figure 1).

Table 4 below summarizes results:

**Table 4: variation of texture under hot showcase storage from 0 to 9 hours. The variation of texture under hot showcase storage (70°C) from 0 hours to 9 hours is evaluated and ranked : ++ : no texture change; + : slight change but still OK; - : heavy change.**

| | **0H** | **1H** | **2.5H** | **4H** | **5H** | **6H** | **7H** | **8H** | **9H** |
|---|---|---|---|---|---|---|---|---|---|
| **Wheat Flour** | ++ | ++ | + | - | - | - | - | - | - |
| **Corn starch** | ++ | - | - | - | - | - | - | - | - |
| **Rice flour** | ++ | ++ | + | - | - | - | - | - | - |
| **Amusko KI** | ++ | + | - | - | - | - | - | - | - |
| **Wheat Flour + 8% Nutralys W** | ++ | ++ | ++ | ++ | ++ | + | + | + | - |
| **Viten + 8% Nutralys W** | ++ | ++ | ++ | ++ | ++ | + | + | + | - |

The introduction of hydrolyzed gluten in duster allows to deep fried chicken meat to keep its initial texture under hot showcase storage. Time storage is multiplied by 4.

### Example 2: Effect of hydrolyzed wheat gluten dosage on deep fried food quality

Different dosages of hydrolyzed wheat gluten (Nutralys^{®} W from Roquette) in wheat flour are compared as dusters:

| | **Wheat Flour (W)** | **0.9% W** | **2% W** | **4% W** | **8% W** | **14% W** | **24% W** |
|---|---|---|---|---|---|---|---|
| **Wheat Flour** | 100 | 99.11 | 98 | 96 | 92 | 86 | 76 |
| **Nutralys W** | - | 0.89 | 2 | 4 | 8 | 14 | 24 |

**Table 5: Duster compositions with different amounts of hydrolyzed wheat gluten.**

| | **39% W** | **44% W** | **50% W** | **60% W** | **70% W** | **80% W** | **90% W** |
|---|---|---|---|---|---|---|---|
| **Wheat Flour** | 61 | 56 | 50 | 40 | 30 | 20 | 10 |
| **Nutralys W** | 39 | 44 | 50 | 60 | 70 | 80 | 90 |

### Batter and Breader recipes are the same than in example 1

The process to obtain deep fried chicken meat is the following:
Dust each material on a surface of chicken evenly.
Dip them into a batter and then dust breader on a surface.
Deep fry for 5 min at 180°C.

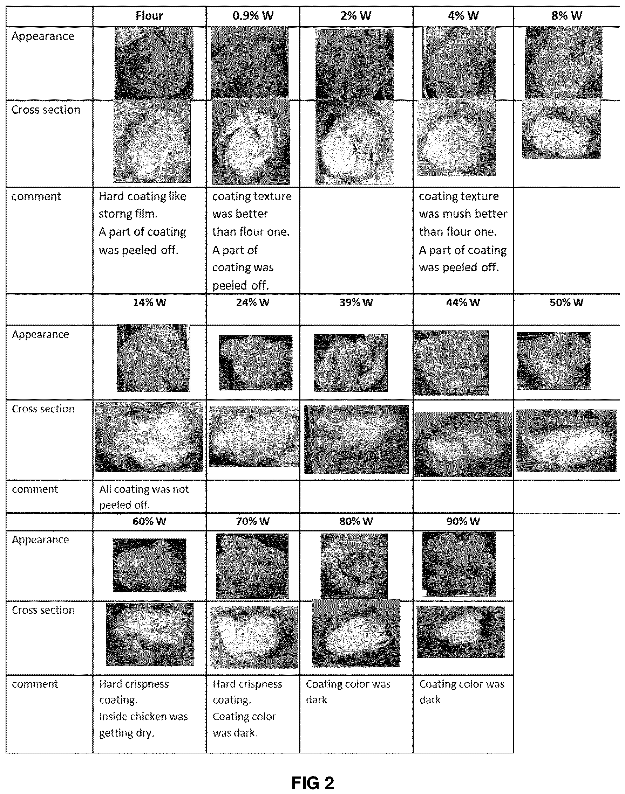

### Photos are taken and coating condition and texture are evaluated after storage under hot showcase (60°C) for 2.5H (Figure 2).

Texture and color are ranked and summarized in the Table 6 below:

**Table 6: Texture and color of deep-fried food after 2.5 hours of storage at 60°C comprising duster with different amount of hydrolyzed gluten.**

| | **Flour** | **0.9% W** | **2% W** | **4% W** | **8% W** | **14% W** | **24% W** | **39% W** | **44% W** | **50% W** | **60% W** | **70% W** | **80% W** | **90% W** |
|---|---|---|---|---|---|---|---|---|---|---|---|---|---|---|
| **Texture** | - | + | + | + | + | + | + | + | + | + | + | + | - | - |
| **Color** | + | + | + | + | + | + | + | + | + | + | + | - | - | - |

A dosage comprised between around 1% and 60% of hydrolyzed wheat gluten in dusters allows reaching a good texture and color for deep fried chicken. Surprisingly the use of a very small amount of hydrolysed gluten (around 1%) in the duster allows an improvement in the texture.

### Example 3: Performance of a gluten and hydrolyzed gluten mix duster versus flour duster.

Different powder mixes listed in the Table 7 below are compared as dusters:

**Table 7: Different power Mixes (Flour and Viten+Mix)**

| | Flour | Viten | Viten+W | W |
|---|---|---|---|---|
| Wheat Flour | 100 | - | - | - |
| Viten | - | 100 | 50 | - |
| Nutralys W | - | - | 50 | 100 |

### Batter and Breader recipes are the same than in example 1

The process to obtain deep fried chicken meat is the following :
Dust each material on a surface of chicken evenly.
Dip them into a batter and then dust breader on a surface.
Deep fry for 5 min at 180°C.

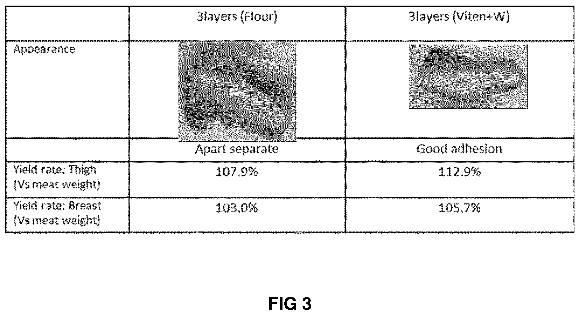

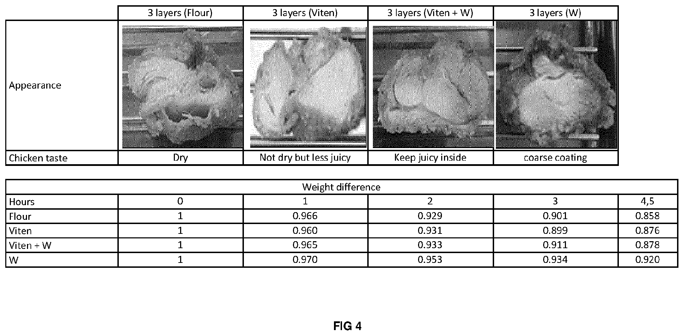

For the deep-fried food using flour and duster useful to the invention, photos are taken, coating condition and texture are evaluated just after being deep fried (Figure 3). The yield rate, percentage of variation of weight of meat piece before and after being deep fried, are also calculated.
[1] Photos are then taken and coating condition/texture are evaluated after storage under hot showcase 60°C during 4,5 h (Figure 4). Variation of weight is also tracked and expressed as percentage (1=100%): compared to the deep fried food using flour as a duster, the ones using duster of gluten and/or hydrolysed glutens are improved regarding the conservation under heat. Moreover, the deep fried food using duster comprising the combination of gluten and hydrolysed gluten is the closest to the control: the coating is not too coarse and the food inside is as juicy as the control.

Deep fried chicken meat are also rapidly frozen at -40°C for 1h and reheat with conventional oven at 220°C 10 min.

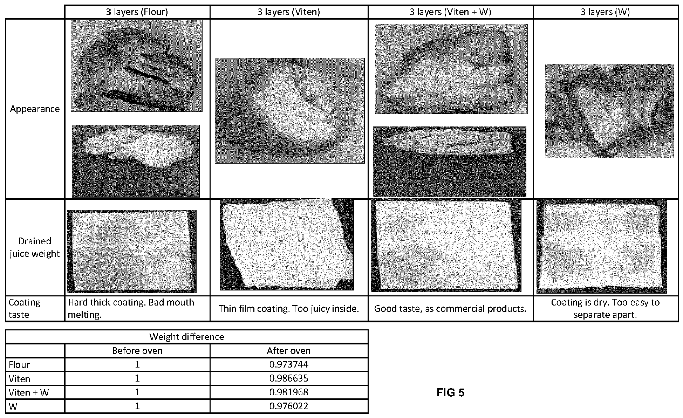

With a gluten/hydrolyzed gluten mix as a duster, less juice is release by deep fried chicken when it is frozen/reheated (Figure 5): compared to the deep fried food using flour as a duster, the one of the invention has better mouth melting and the coating is good and not too thick. The issue of the deep fried food using duster of gluten is that it gives also a bad organoleptic experience in the mouth due to a feeling of thin film coating on the food. The deep fried food using duster of hydrolysed gluten is too dry and separates too easily from the food resulting also in bad organoleptic sensation.

## Claims

1. A powder duster composition for deep fried foods comprising between 1% and 65% of hydrolyzed wheat gluten, preferably between 14% and 65% by weight of total dry weight of the duster, said hydrolyzed wheat gluten having a hydrolysis degree comprised between 0.5 to 5 %.

2. The powder duster composition of claim 1 further comprising native wheat gluten.

3. The powder duster composition according to any one of claims 1 or 2 further comprising wheat flour.

4. The powder duster composition according to any one of claims 1 or 2 consisting of 1 to 65% of hydrolyzed wheat gluten by weight of total dry weight and 35 to 99 % native gluten by weight of total dry weight.

5. A method for producing a powder duster composition according to any one of claims 1 to 4 comprising the steps of:
1) providing native wheat gluten;
2) hydrolyzing wheat gluten for obtaining a degree of hydrolysis (DH) between 0.5% and 5%;
3) mixing hydrolyzed wheat gluten with other compounds in order to have between 1% and 65% of hydrolyzed wheat gluten by weight of total dry weight
4) optionally drying the mix obtained in step 3.

6. A deep-fried food product comprising foodstuff coated with a powder duster composition according to any one of claims 1 to 4.

7. A method of preparing a deep-fried food comprising the steps of:
- coating a food product with a powder pre-dust composition according to any one of claims 1 to 4,
- coating the duster-coated food product with a batter composition,
- coating the batter-coated food product with a breading composition.

## Patentansprüche

1. Pulverzerstäuberzusammensetzung für frittierte Lebensmittel, umfassend zwischen 1 Gew.-% und 65 Gew.-% hydrolysiertes Weizengluten, bevorzugt zwischen 14 Gew.-% und 65 Gew.-%, bezogen auf das Gesamttrockengewicht des Zerstäubers, wobei das hydrolysierte Weizengluten einen Hydrolysegrad zwischen 0,5 und 5 % aufweist.

2. Pulverzerstäuberzusammensetzung nach Anspruch 1, ferner umfassend natives Weizengluten.

3. Pulverzerstäuberzusammensetzung nach einem der Ansprüche 1 oder 2, ferner umfassend Weizenmehl.

4. Pulverzerstäuberzusammensetzung nach einem der Ansprüche 1 oder 2, bestehend aus 1 bis 65 Gew.-% hydrolysiertem Weizengluten, bezogen auf das Gesamttrockengewicht, und 35 bis 99 Gew.-% nativem Gluten, bezogen auf das Gesamttrockengewicht.

5. Verfahren zum Herstellen einer Pulverzerstäuberzusammensetzung nach einem der Ansprüche 1 bis 4, umfassend die Schritte des:
1) Bereitstellens von nativem Weizengluten;
2) Hydrolysierens von Weizengluten zum Erhalten eines Hydrolysegrads (DH) zwischen 0,5 % und 5 %;
3) Mischens von hydrolysiertem Weizengluten mit anderen Verbindungen, um zwischen 1 Gew.-% und 65 Gew.-% hydrolysiertes Weizengluten, bezogen auf das Gesamttrockengewicht, zu bekommen
4) gegebenenfalls Trocknens der in Schritt 3 erhaltenen Mischung.

6. Frittiertes Lebensmittelprodukt, umfassend ein Lebensmittel, welches mit einer Pulverzerstäuberzusammensetzung nach einem der Ansprüche 1 bis 4 überzogen ist.

7. Verfahren zum Zubereiten eines frittierten Lebensmittels, umfassend die Schritte des:
- Überziehens eines Lebensmittelprodukts mit einer Pulvervorstaubzusammensetzung nach einem der Ansprüche 1 bis 4,
- Überziehens des mit Zerstäuber überzogenen Lebensmittelprodukts mit einer Teigzusammensetzung,
- Überziehens des mit Teig überzogenen Lebensmittelprodukts mit einer Panierzusammensetzung.

## Revendications

1. Composition poudreuse de saupoudrage pour aliments frits comprenant entre 1 % et 65 % de gluten de blé hydrolysé, de préférence entre 14 % et 65 % en poids du poids sec total du saupoudrage, ledit gluten de blé hydrolysé ayant un degré d'hydrolyse compris entre 0,5 et 5 %.

2. Composition poudreuse de saupoudrage selon la revendication 1 comprenant en outre du gluten de blé natif.

3. Composition poudreuse de saupoudrage selon l'une quelconque des revendications 1 ou 2 comprenant en outre de la farine de blé.

4. Composition poudreuse de saupoudrage selon l'une quelconque des revendications 1 ou 2 constituée de 1 à 65 % de gluten de blé hydrolysé en poids du poids sec total et de 35 à 99 % de gluten natif en poids du poids sec total.

5. Procédé de production d'une composition poudreuse de saupoudrage selon l'une quelconque des revendications 1 à 4 comprenant les étapes de :
1) fourniture du gluten de blé natif ;
2) hydrolyse du gluten de blé pour obtenir un degré d'hydrolyse (DH) entre 0,5 % et 5 % ;
3) mélange du gluten de blé hydrolysé avec d'autres composés afin d'avoir entre 1 % et 65 % de gluten de blé hydrolysé en poids du poids sec total
4) séchage facultatif du mélange obtenu à l'étape 3.

6. Produit alimentaire frit comprenant un aliment enrobé d'une composition poudreuse de saupoudrage selon l'une quelconque des revendications 1 à 4.

7. Procédé de préparation d'un aliment frit comprenant les étapes de :
- enrobage d'un produit alimentaire avec une composition poudreuse de pré-poudrage selon l'une quelconque des revendications 1 à 4,
- enrobage du produit alimentaire enrobé de saupoudrage avec une composition de pâte à frire,
- enrobage du produit alimentaire enrobé de pâte à frire avec une composition de panure.
